# EUROPEAN PATENT SPECIFICATION

(11) **EP 0 376 675 B1**
(45) Date of publication and mention of the grant of the patent: **08.03.1995**
(21) Application number: 89313584.8
(22) Date of filing: 27.12.1989
(51) Int. Cl.: H04N 9/79

(54) **Video signal recording/reproducing device**
Aufzeichnungs-/Wiedergabevorrichtung von Videosignalen
Dispositif d'enregistrement/reproduction de signaux vidéo

(30) Priority: 27.12.1988 JP 330953/88; 27.12.1988 JP 330954/88
(43) Date of publication of application: 04.07.1990
(73) Proprietor: SHARP KABUSHIKI KAISHA, Osaka 545 (JP)
(72) Inventor: Tabuchi, Toshiaki, Nara-shi Nara-ken (JP); Kasuga, Kyoji, Tenri-shi Nara-ken (JP)
(74) Representative: Brown, Kenneth Richard

(56) References cited:
- DE-A- 3 702 333
- US-A- 4 486 792
- US-A- 4 743 977
- US-A- 4 743 978
- IEEE TRANSACTIONS ON CONCUMER ELECTRONICS, vol. 35, no. 3, August 1989, New York, US YOSHITOMI NAGAOKA et al. "A two-channel recording VCR using orthogonal arrangement of heads." pages 202-206

## Description

The present invention relates to a video signal recording/reproducing device wherein both baseband signals and MUSE signals can be recorded or reproduced for use in, for example HD-TV's, and one field is divided into a plurality of segments so as to be recorded in respective different tracks.

One of the most popular methods for obtaining high resolution images for television screen images is the HD-TV (high-definition television) method. A method for performing band compression of HD-TV signals in order to transmit them has been developed, and is known as the MUSE (multiple sub-Nyquist sampling encoding) method. At present, several VTR's (video tape recorders) for recording these baseband signals and MUSE signals for HD-TV have already been suggested.

For example, one of the VTR's suggested for recording baseband signals for HD-TV's is disclosed in Wideband Recording Technology for High-Definition Baseband VCRS (1987 IEEE Vol. CE-33 No. 3).

In this VTR, in order to record or reproduce video signals having band limitations of 20M Hz for brightness signal and 5MHz for colour signal, the rotation speed of the rotary drum is increased to 5400rpm, three times as fast as those of conventional household VTR's. A segment recording method is also used, wherein one field is divided into three segments so as to be recorded in respective different tracks, each of these divided tracks being divided into two parts for two-channel recording, thereby permitting a recording frequency to have a narrow band.

Compared with the above-mentioned baseband signal, a MUSE signal can be compressed to about half the size of the above. A VTR is suggested, wherein the rotation speed of a rotary drum is twice that of conventional household VTR's, and one field is divided into two segments for performing one-channel recording. Accordingly, the VTR employing the MUSE signal is able to perform a longer recording than that employing the baseband signal.

However, some of these VTR's for recording baseband signals from HD-TV and others for recording MUSE signals have been respectively developed as different devices aimed only at respective video signals. Conventionally, the VTR for recording baseband signals, which has shorter recording time, is used in order to obtain high resolution images. On the other hand, the VTR having a longer recording time, is used only to record MUSE signals intended for satellite broadcast. Therefore, users have to select one among these VTR's depending on whether they want to have high resolution images or to have a longer recording time regardless of image quality. More specifically, they have been unable to perform a long time recording or reproducing with high resolution images by one device. This problem is common to a method wherein a selection can be made between video signals having a wide band and those having a narrow band.

Hereupon, the following description deals with a conventional video signal recording/reproducing device according to Figs. 14 to 17.

As is shown in Fig. 14, there are four magnetic heads 22 secured to a rotary drum 21, forming two pairs. Each pair of magnetic heads 22 is located on the rotary drum 21 opposite each other with an interval of 180°. A video tape 23, supplied through a feeding side guide pole 24 and a winding side guide pole 25, is helically wrapped onto the rotary drum 21 at an angle of more than 180°.

The above-mentioned rotary drum 21 rotates at high speed, 3600rpm, in order to increase the relative speed between the magnetic heads 22 and the video tape 23. This is because baseband signals for HD-TV need a band of more than 20 M Hz. Baseband signals having a wide band are recorded using the so-called two-channel two-segment method by the four magnetic heads 22 located on the rotary drum 21, thereby permitting the magnetic heads 22 to have a narrow band as their recording band. More specifically, at first one field portion of a baseband signal is divided into two segments, these are distributed to the respective pairs of magnetic heads 22 located at a 180° interval. Next, each of the distributed segments is divided again into two channels, and simultaneously recorded respectively as two tracks by each pair of two magnetic heads 22.

Accordingly, as shown in Fig. 15, on the video tape 23, two tracks 26 corresponding to one segment are simultaneously formed every half a rotation of the rotary drum 21. Then, a total of four tracks 26 corresponding to two segments formed by one rotation of the rotary drum 21 compose one field, and the tracks of two fields 26, each field having four tracks, compose one frame of a recorded baseband signal.

It is an object of the present invention to record and reproduce both wide band and narrow band video signals by the use of only one device.

In order to achieve the above object, the present invention comprises a video signal recording/reproducing device in which a video tape passes helically round a rotary drum on which is mounted an assembly of recording heads for recording/reproducing video signals on the tape, said device being selectively operable in a first, wide-band signal mode and a second, narrow-band signal mode and comprising a rotary drum having at least one group of magnetic heads including a primary head and two secondary heads installed therein; and having head switching means for switching between different sets of heads and tape speed switching means for switching between different tape speeds, characterised by said device further comprising a band judgement means for determining whether said video signal is a wide-band signal or a narrow-band signal;
said tape speed switching means being capable of automatically switching the tape speed in accordance with the band judgement means from a low speed to a high speed for wide-band signals and from a high speed to a low speed for narrow-band signals; and by
said head switching means being capable of automatically selecting which secondary head is to be used with said primary head to ensure that a secondary head used for wide-band signals is different to a secondary head used for narrow-band signals.

According to the video signals, one of the above secondary heads is switched by the head switching means and the running speed of the tape is switched by the tape speed switching means, and thereby the composition permits a video signal recording/reproducing device to record and reproduce both video signals having a wide band and a narrow band by the use of only one device.

In accordance with the above composition, video signals having a wide band are recorded in two channels. Video signals having a narrow band are recorded in one channel in the use of the same device.

For a fuller understanding of the nature and advantages of the invention, reference should be made to the ensuing detailed description taken in conjunction with the accompanying drawings.

Figs. 1 to 5 show a preferred embodiment of the present invention.

Fig. 1 is a block diagram showing the composition of the control part of a video signal recording/reproducing device.

Fig. 2 is a plan view of a rotary drum.

Fig. 3 is an arrangement plan showing the configuration of magnetic heads.

Fig. 4 is a front view of a video tape showing track patterns formed by magnetic heads.

Fig. 5(a) is a front view of a video tape showing track patterns in recording baseband signals.

Fig. 5(b) is a front view of a video tape showing track patterns in recording MUSE signals.

Figs. 6 and 7 show a prior art.

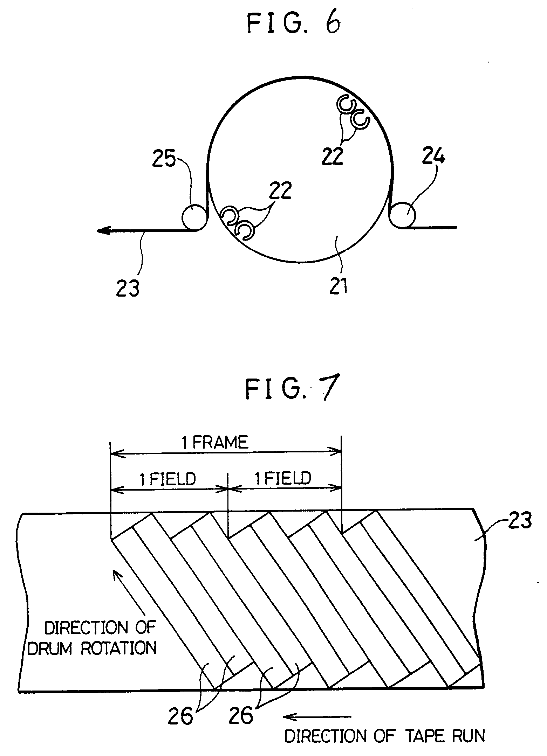

Fig. 6 shows a plan view of a rotary drum.

Fig. 7 is a front view of a video tape showing track patterns formed by magnetic heads.

This embodiment relates to a video signal recording/reproducing device for recording and reproducing baseband signals for HD-TV as well as MUSE signals by adopting a 1.5 head method. The above 1.5 head method means a method wherein main tracks as well as auxiliary tracks are formed on a video tape using a so-called main head and auxiliary heads, and one field portion of a video signal is helically recorded every one rotation of a rotary drum.

Baseband signals for HD-TV require a band wider than 20MHz for obtaining high quality images. The band is five times as wide as that required for video signals used in the present NTSC method. Accordingly, in order to record such baseband signals, the relative speed between magnetic heads and a video tape should be two to three times as fast as that required for the conventional household VTR's, and the rotation speed of a rotary drum should be 3600rpm to 7200rpm so as to widen the band. Moreover, a track should be divided to permit two-channel recording, and therefore a recording band of each track should be narrowed down to half the size. For example, supposing a band of a baseband signal is 24MHz, after making the band have two channels, the band has 12MHz per one channel. Furthermore, generally the recording method of VTR's is FM modulation method, and its central carrier frequency is 18MHz. Supposing this frequency deviation is ± 2MHz, in this case the recording band is 16MHz to 20MHz.

In MUSE signals, the required band is narrowed down to half the size by performing band compression on the above baseband signal. Accordingly, in order to record this MUSE signal, it is only necessary to have a recording band of one channel portion in comparison with two channels in the case of the above baseband signal. As is described above, in order to record video signals for HD-TV's, two-channel recording is required for baseband signals, whereas only one-channel recording is required for MUSE signals.

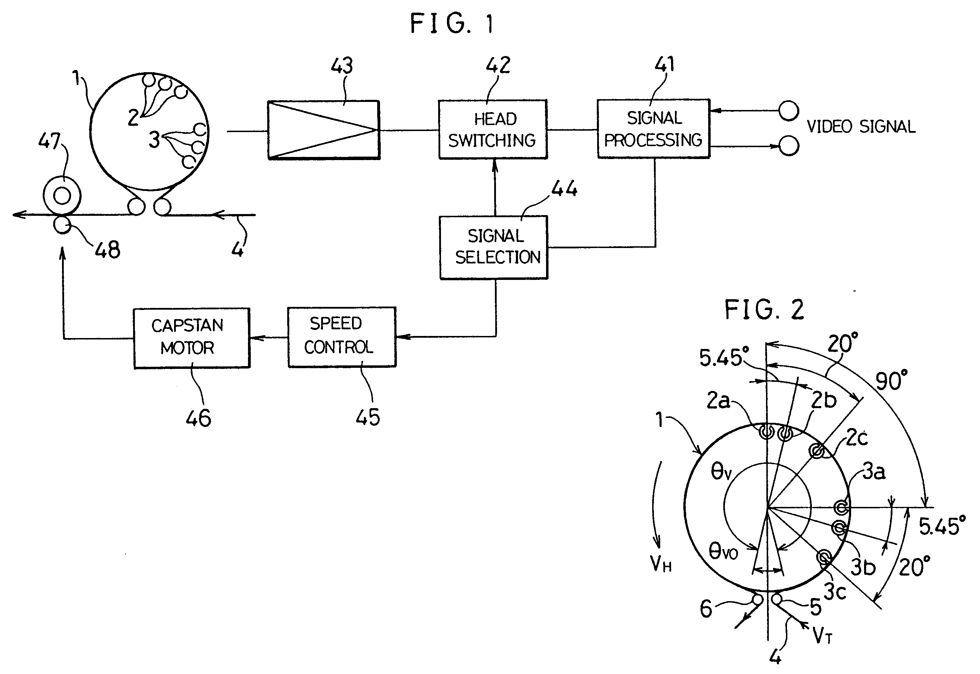

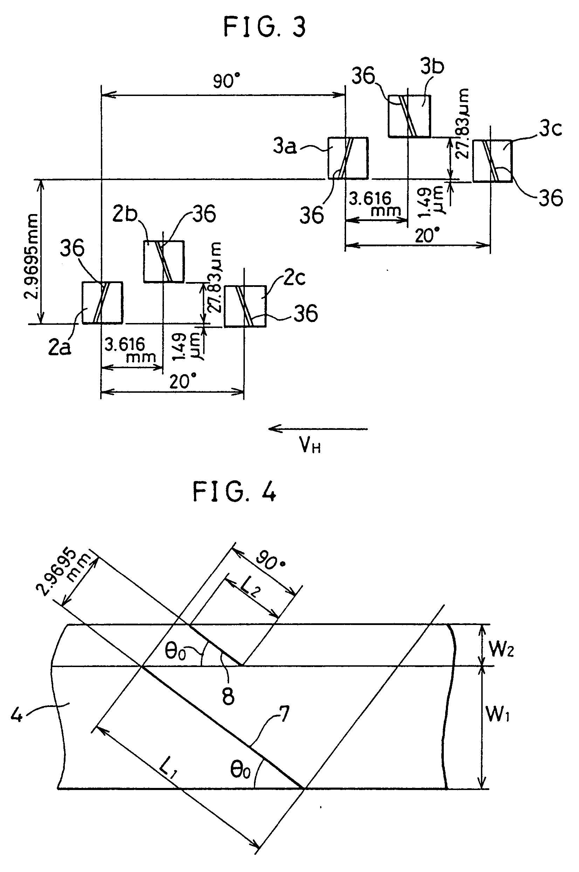

Fig. 2 as well as Fig. 3 shows the configuration of magnetic heads 2 and 3 on a rotary drum 1 in accordance with a video signal recording/reproducing device of the embodiment. As shown in Fig. 2, a secondary magnetic head 2b is located to the rear of the primary magnetic head 2a with an angle of 5.45° to the direction of rotation of a rotary drum 1, and another secondary magnetic head 2c is also located to the rear of primary magnetic head 2a, with an angle of 20°. A primary magnetic head 3a is located to the rear of the primary magnetic head 2a with an angle of 90° to the direction of rotation of the rotary drum 1. A secondary magnetic head 3b is located to the rear of primary magnetic head 3a with an angle of 5.45°, and a secondary magnetic head 3c is also located in the rear with an angle of 20°. In addition, rotary drum 1 has, for example, a diameter of 76mm and, revolves at a speed of V_{H}, 3600rpm, and is powered by a motor (not shown).

Moreover, as shown in Fig. 3, the secondary magnetic head 2b is at a relative height of 27.83»m above the primary magnetic head 2a on the rotary drum 1, and the secondary magnetic head 2c is at a relative height of 1.49»m below the magnetic head 2a on the rotary drum 1. The primary magnetic head 3a is at a relative height of 2.9695mm above the primary magnetic head 2a. The secondary magnetic head 3b is at a relative height of 27.83»m above the primary magnetic head 3a, and the secondary magnetic head 3c is at a relative height of 1.49»m below primary magnetic head 3a.

Furthermore, assuming that an azimuth angle of a magnetic gap 36 on the primary magnetic head 2a is plus, the azimuth angle of the magnetic gap 36 on the respective secondary magnetic heads, 2b and 2c, is for example set as minus in a reverse way. Assuming that the azimuth angle of the magnetic gap 36 on the primary magnetic head 3a is plus, the azimuth angle of the magnetic gap 36 of the respective secondary magnetic heads, 3b and 3c, is for example set as minus in a reverse way.

The above magnetic heads, 2a to 2c, comprise a main group of magnetic heads for forming main tracks 7 in the 1.5 head method (described later). The magnetic heads, 3a to 3c, comprise an auxiliary group of magnetic heads for forming auxiliary tracks 8 in the 1.5 head method (described later). The magnetic heads 2 and 3 are preferably arranged as closely as possible to one another in each group, which preferably forms a group of integrated type. In this embodiment magnetic heads 2a and 3a are referred to as main heads.

On the rotary drum 1 wherein magnetic heads 2 as well as 3 are located in the above configuration, a video tape 4 is helically wrapped as shown in Fig. 2. The video tape 4 runs in the same direction as the rotary drum 1. Moreover, the video tape 4 is guided to the rotary drum 1 by a feeding side guide pole 5 and a winding side guide pole 6, and is wrapped thereon so that it has, for example, an angle of 312° around the rotary drum 1 as an effective tape wrap angle, ϑᵥ.

On the above video tape 4, a main track 7 (drawn with a solid line in the drawing for convenience) is formed by the magnetic heads 2 as is shown in Fig. 4, and a auxiliary track 9 (drawn with a solid line for convenience) is formed by the magnetic heads 3. Hereupon, the main track 7 with respect to the video tape 4 as well as a track lead angle ϑₒ with respect to the auxiliary track 8 satisfies the requirements of the following formula (1),${\text{ϑ}}_{\text{o}} \text{= sin⁻¹(W₁/L₁) = sin⁻¹(W₂/L₂)}$

The terms L₁ and L₂ represent the respective recording lengths of the main track 7 and the auxiliary track 8, and the terms W₁ and W₂ represent the respective tape effective recording widths of these tracks.

The recording lengths, L₁ and L₂ of the main track 7 and the auxiliary track 8 depend on the tape wrap angle of the video tape 4 to the rotary drum 1, and are respectively expressed by the following formulas, (2) and (3).${\text{L₁ = π·D(ϑ}}_{\text{V}} \text{/360°)}$${\text{L₂ = π·D(ϑ}}_{\text{VO}} \text{/360°)}$
where D represents the diameter of the rotary drum 1, and the effective tape wrap angle is 312° as is mentioned before. (An auxiliary tape wrap angle, ϑ_{VO} is 48° in this case.)

As the result of the above, a recording all around the circumference of the rotary drum 1 can be performed by the main tracks 7 and the auxiliary tracks 8, and one field portion of video signals is recorded or reproduced while the rotary drum 1 makes one rotation. Accordingly, when the rotary drum 1 makes two rotations, one frame portion of the video signals is recorded and reproduced.

The following description deals with the composition of a control part for controlling the magnetic heads 2 and 3 and the video tape 4 according to Fig. 1.

Video signals are entered to a signal processing circuit 41 and recorded therein, and they are also released from the signal processing circuit 41 and are reproduced. More specifically, the signal processing circuit 41 is a circuit which converts video signals from analog to digital, and processes them adding synchronous signals or the like. The signal processing circuit 41 is connected to the magnetic heads 2 and 3 connected to the rotary drum 1 through a head switching circuit 42 and a head amplifier 43. For example, in recording, video signals processed in the signal processing circuit 41 are sent to the magnetic heads 2 and 3 connected to the rotary drum 1 through the head switching circuit 42 and the head amplifier 43. On the other hand, in reproducing, video signals reproduced by the magnetic heads 2 and 3 are sent to the signal processing circuit 41 through the head amplifier 43 and the head switching circuit 42.

The head switching circuit 42 is a circuit which switches between the secondary magnetic heads 2b and 2c in the magnetic heads 2, and also switches between the secondary magnetic heads 3b and 3c in the magnetic heads 3. For example, when a combination of the primary and secondary magnetic heads, 2a and 2b, and 3a and 3b, is selected by the head switching circuit 42, video signals divided into two channels are on the one hand simultaneously sent to the respective magnetic heads, 2a and 2b, and on the other hand simultaneously sent to the respective magnetic heads 3a and 3b. Similarly, when a combination of the primary and secondary magnetic heads, 2a and 2c, and, 3a and 3c, is selected by the head switching circuit 42, video signals of one channel are alternately sent to the primary magnetic head 2a or the secondary magnetic head 2c every one rotation of the rotary drum 1, and are alternately sent to the primary magnetic head 3a or the secondary magnetic head 3c. The above operation is similarly performed during reproduction. The head amplifier 43 is a circuit which amplifies video signals and acts to obtain the most appropriate current.

Video signals from the signal processing circuit 41 are also sent to a signal selection circuit 44. The signal selection circuit 44 identifies whether those video signals are baseband signals or MUSE signals, and releases signals to the head switching circuit 42 and a speed control circuit 45 according to the result of the identification. In addition, this signal selection circuit 44 can comprise hardware such as a switch for switching between baseband signals and MUSE signals by a manual operation. The head switching circuit 42 performs the above switching actions according to the signals from the signal selection circuit 44.

The speed control circuit 45 is a circuit for controlling the running speed of the video tape 4 according to the signals from the signal selection circuit 44. The output of the speed control circuit 45 is connected to a capstan motor 46. The capstan motor 46 drives a capstan 48, and permits the video tape 4 to run at a fixed speed by the use of the capstan 48 as well as a pinch roller 47.

The following description deals with operations of a video signal recording/reproducing device having the above composition according to Fig. 1.

In recording or reproducing video signals, the signal selection circuit 44 identifies whether they are baseband signals or MUSE signals. Then, according to the result of the identification, the head switching circuit 42 performs the head switching between magnetic heads 2 and 3, and the speed control circuit 45 controls the running speed of the video tape 4.

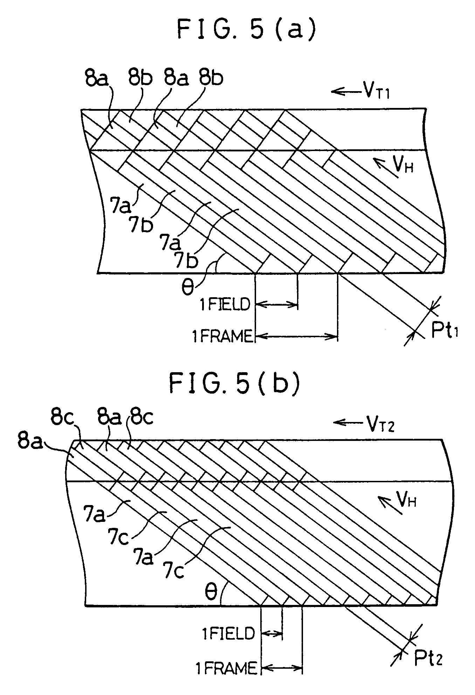

For example, if the video signals are baseband signals (video signals having a wide band), the respective primary and secondary magnetic heads, 2a and 2b, and the respective primary and secondary magnetic heads, 3a and 3b, are selected by the head switching circuit 42, and the running speed of the video tape 4 is increased to a high speed by the speed control circuit 45. In this case, track patterns as shown in Fig. 5(a) are formed on the video tape 4. More specifically, main tracks 7a and 7b, which are located adjacent each other, are simultaneously formed by respective primary and secondary magnetic heads, 2a and 2b. Auxiliary tracks, 8a and 8b, which are located adjacent each other, are also simultaneously formed by the respective primary and secondary magnetic heads, 3a and 3b. In this way, while the rotary drum 1 makes one rotation, one field is formed including the two main tracks, 7a and 7b, and the two auxiliary tracks, 8a and 8b, respectively, so the recording method is expressed as a two-channel recording method. Moreover, the respective primary and secondary magnetic heads 2a and 2b, as well as 3a and 3b, have the azimuth angle of their magnetic gaps 36 reversed with respect to each other. Therefore, guard bandless recordings of the main tracks, 7a and 8b, as well as the auxiliary tracks 8a and 8b, can be performed, and therefore effective use of the video tape 4 can be made.

On the other hand, if the video signals are MUSE signals (signals having a narrow band), the respective primary and secondary magnetic heads, 2a and 2c, and 3a and 3c, are selected by the head switching circuit 42, and the running speed of the video tape 4 is decreased to be low by the speed control circuit 45. In this case, track patterns as shown in Fig. 5(b) are formed on the video tape 4. More specifically, after a main track 7a is formed by the primary magnetic head 2a, a main track 7c adjacent track 7a is formed by the secondary magnetic head 2c through the next rotation of the rotary drum 1. Moreover, after auxiliary track 8a is formed by a primary magnetic head 3a, an auxiliary track 8c adjacent track 8a is formed by the secondary magnetic head 3c through the next rotation of the rotary drum 1. In this way, since one field is formed by the main track 7a and the auxiliary track 8a, or by the main track 7c and the auxiliary track 8c, the recording method is expressed as a one channel recording method. Moreover, these respective primary and secondary magnetic heads, 2a and 2c, as well as 3a and 3c, have the azimuth angle of their magnetic gaps 36 reversed with respect to each other. Therefore, guard bandless recordings of the main tracks, 7a and 7c, as well as the auxiliary tracks 8a and 8c, can be performed, and therefore effective use of the video tape 4 can be made.

In addition, since the secondary magnetic head 2c, selected when recording MUSE signals, is located at a position 20° behind that of the primary magnetic head 2a in the direction of the rotary drum 1, the main track 7c has a delay of 20° to the main track 7a in a signal phase point of view. Accordingly, in the case of MUSE signals, video signals should be delayed by the use of a line memory or other memory elements in order to adjust this delay.

Hereupon, Table 1 shows respective specifications for both the cases of baseband signals and MUSE signals. In the table, track patterns in both of the cases are supposed to have the H alignment (α_{H} = 1.5)

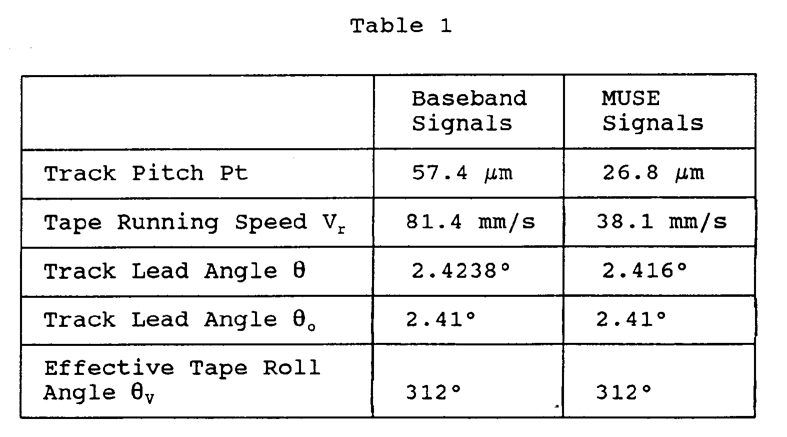

As mentioned above, the video signal recording/reproducing device in the described embodiment of the present invention permits on the one hand to record video signals having a wide band without the deterioration of image quality by the use of two channel recording, and on the other hand to record video signals having a narrow band by the use of one channel recording in order to achieve a long period recording. Moreover, in recording PCM audio signals as well as video signals, four channel recording can be performed by quantizing them in sixteen bits in the case of baseband signals, and in the case of MUSE signals, the same can be performed by quantizing them in eight bits.

In the present embodiment, a video signal recording/reproducing device using a so-called 1.5 head method is described, but it is possible to use another method to achieve the present invention, and the diameter of the drum or the dimensions of head installing positions is not limited to the above. Similarly, the present invention is adoptable not only in HD-TV's but also in other systems wherein video signals are selectable between those having a wide band and a narrow band.

## Claims

1. A video signal recording/reproducing device in which a video tape (4) passes helically round a rotary drum (1) on which is mounted an assembly of recording heads (2, 3) for recording/reproducing video signals on the tape (4), said device being selectively operable in a first, wide-band signal mode and a second, narrow-band signal mode and comprising a rotary drum (1) having at least one group of magnetic heads (2, 3) including a primary head (2a, 3a) and two secondary heads (2b, 2c, 3b, 3c) installed therein; and having head switching means (42) for switching between different sets of heads and tape speed switching means (45) for switching between different tape speeds, characterised by said device further comprising a band judgement means (44) for determining whether said video signal is a wide-band signal or a narrow-band signal;
said tape speed switching means (45) being capable of automatically switching the tape speed in accordance with the band judgement means from a low speed to a high speed for wide-band signals and from a high speed to a low speed for narrow-band signals; and by
said head switching means (42) being capable of automatically selecting which secondary head (2b, 2c, 3b, 3c) is to be used with said primary head (2a, 3a) to ensure that a secondary head used for wide-band signals is different to a secondary head used for narrow-band signals.

2. A video signal recording/reproducing device according to claim 1 wherein there is provided a signal processing circuit (41) for processing video signals entered therein or released therefrom; and wherein
said band judgement means (44) is a signal selection circuit for identifying whether signals entered thereto from the above signal processing circuit (41) are wide-band signals or narrow-band signals;
said head switching means (42) is a head switching circuit for determining a secondary head (2b, 2c, 3b, 3c) to be used in combination with a primary head (2a, 3a) by switching said two secondary heads according to an input from the signal selection circuit (41); there being further provided
a head amplifier (43) which amplifies video signals sent thereto through the signal processing circuit (41) and the head switching circuit (42) as well as reproduces video signals sent thereto through the primary head (2a, 3a) and the secondary head (2b, 2c, 3b, 3c), and which acts to obtain the most appropriate current; and wherein
said speed switching means (45) is a speed control circuit for controlling video tape speeds according to the output from the signal selection circuit.

3. A video signal recording/reproducing device according to claim 1 or claim 2, wherein the secondary heads (2b, 2c, 3b, 3c) comprise a first magnetic head (2b, 3b) and a second magnetic head (2c, 3c) each of which has a magnetic gap having an azimuth angle which is the reverse of the primary head azimuth angle, and two-channel guard bandless recordings are performed of signals having a wide band by the combination of the primary head (2a, 3a) and the first magnetic head (2b, 3b), while one-channel guard bandless recordings are performed of signals having a narrow band by the combination of the primary head (2a, 3a) and the second magnetic head (2c, 3c).

4. A video signal recording/reproducing device according to claim 1 or claim 2, wherein the secondary heads (2b, 2c, 3b, 3c) comprise a first magnetic head (2b, 3b) and a second magnetic head (2c, 3c), and the second magnetic head (2c, 3c) has the same azimuth angle as either the primary head (2a, 3a) or the first head (2b, 3b).

5. A video signal recording/reproducing device according to claim 3 or claim 4, wherein the first head (2b, 3b) is located in a position for forming recording tracks adjacent to those formed by the primary head (2a, 3a) on a video tape in the same single rotation of the rotary drum (1).

6. A video signal recording/reproducing device according to claim 5, wherein the second magnetic head (2c, 3c) is located in a position for forming recording tracks adjacent to those formed by the primary head (2a, 3a) on a video tape during the rotation of the rotary drum (11) during the next rotation of the rotary drum.

7. A video signal recording/reproducing device according to claim 3 or claim 4, wherein the primary head (2a, 3a) and the secondary heads (2b, 2c, 3b, 3c) are integrated into one structure.

8. A video signal recording/reproducing device according to claim 2 or claim 3, wherein the signals having a wide band are defined as baseband signals, and the signals having a narrow band are defined as MUSE signals.

9. A video signal recording/reproducing device according to any preceding claim, wherein the video tape (4) comprises a main track area formed by main heads (2) and an auxiliary track area formed by auxiliary heads (3), and the track lead angles of both areas are the same.

## Patentansprüche

1. Aufzeichnungs-/Wiedergabevorrichtung für Videosignale, bei der ein Videoband (4) schraubenförmig um eine rotierende Trommel (1) läuft, an der eine Anordnung von Aufzeichnungsköpfen (2, 3) zum Aufzeichnen/Wiedergeben von Videosignalen auf dem Band (4) angebracht ist, wobei die Vorrichtung wahlweise in einem ersten Modus für breitbandige Signale und einem zweiten Modus für schmalbandige Signale betreibbar ist und sie eine rotierende Trommel (1) mit mindestens einer Gruppe von Magnetköpfen (2, 3) mit einem Primärkopf (2a, 3a) und zwei Sekundärköpfen (2b, 2c, 3b, 3c), die daran angebracht sind, aufweist; und sie eine Kopfumschalteinrichtung (42) zum Umschalten zwischen verschiedenen Sätzen von Köpfen sowie eine Bandgeschwindigkeit-Umschalteinrichtung (45) zum Umschalten zwischen verschiedenen Bandgeschwindigkeiten aufweist, **dadurch gekennzeichnet, daß**
- die Vorrichtung ferner eine Banderkennungseinrichtung (44) zum Ermitteln, ob das Videosignal ein breitbandiges Signal oder ein schmalbandiges Signal ist, aufweist;
- wobei die Bandgeschwindigkeit-Umschalteinrichtung (45) die Bandgeschwindigkeit abhängig von der Information der Banderkennungseinrichtung von einer langsamen Geschwindigkeit auf eine hohe Geschwindigkeit für breitbandige Signale und von einer hohen Geschwindigkeit auf eine niedrige Geschwindigkeit für schmalbandige Signale automatisch umschalten kann; und
- wobei die Kopfumschalteinrichtung (42) automatisch auswählen kann, welcher Sekundärkopf (2b, 2c, 3b, 3c) mit dem Primärkopf (2a, 3a) zu verwenden ist, um zu gewährleisten, daß ein für breitbandige Signale verwendeter Sekundärkopf verschieden von einem für schmalbandige Signale verwendeten Sekundärkopf ist.

2. Aufzeichnungs-/Wiedergabevorrichtung für Videosignale nach Anspruch 1, bei der eine Signalverarbeitungsschaltung (41) vorhanden ist, um in sie eingegebene oder von ihr ausgegebene Videosignale zu verarbeiten; und
- die Grundbanderkennungseinrichtung (44) eine Signalauswahlschaltung ist, die ermittelt, ob die in sie von der vorstehend genannten Signalverarbeitungsschaltung (41) eingegebene Signale breitbandige Signale oder schmalbandige Signale sind;
- die Kopfumschalteinrichtung (42) eine Kopfumschalteinrichtung zum Festlegen desjenigen Sekundärkopfs (2b, 2c, 3b, 3c) ist, der in Kombination mit einem Primärkopf (2a, 3a) zu verwenden ist, was durch Umschalten der zwei Sekundärköpfe abhängig vom Eingangssignal von der Signalauswahlschaltung (41) erfolgt; und
- ferner mit einem Kopfverstärker (43), der Videosignale verstärkt, die ihm über die Signalverarbeitungsschaltung (41) und die Kopfumschaltstufe (42) zugeführt werden, und der Videosignale wiedergibt, die vom Primärkopf (2a, 3a) und dem Sekundärkopf (2b, 2c, 3b, 3c) an ihn geliefert werden und der so arbeitet, daß er den geeignetsten Strom einstellt; und
- wobei die Geschwindigkeit-Umschalteinrichtung (45) eine Geschwindigkeit-Steuerschaltung zum Steuern der Videobandgeschwindigkeiten abhängig vom Ausgangssignal der Signalauswahlschaltung ist.

3. Aufzeichnungs-/Wiedergabevorrichtung für Videosignale nach Anspruch 1 oder Anspruch 2, bei der die Sekundärköpfe (2b, 2c, 3b, 3c) einen ersten Magnetkopf (2b, 3b) und einen zweiten Magnetkopf (2c, 3c) umfassen, von denen jeder über einen magnetischen Spalt mit einem Azimutwinkel verfügt, der umgekehrt zum Azimutwinkel des Primärkopfs ist, und bei der schutzbandlose Zweikanalaufzeichnung von Signalen mit breitem Band durch die Kombination aus dem Primärkopf (2a, 3a) und dem ersten Magnetkopf (2b, 3b) ausgeführt wird, während schutzbandlose Einkanalaufzeichnung von Signalen mit schmalem Band durch die Kombination aus dem Primärkopf (2a, 3a) und dem zweiten Magnetkopf (2c, 3c) ausgeführt wird.

4. Aufzeichnungs-/Wiedergabevorrichtung für Videosignale nach Anspruch 1 oder Anspruch 2, bei der die Sekundärköpfe (2b, 2c, 3b, 3c) einen ersten Magnetkopf (2b, 3b) und einen zweiten Magnetkopf (2c, 3c) umfassen und der zweite Magnetkopf (2c, 3c) denselben Azimutwinkel wie entweder der Primärkopf (2a, 3a) oder der erste Kopf (2b, 3b) aufweist.

5. Aufzeichnungs-/Wiedergabevorrichtung für Videosignale nach Anspruch 3 oder Anspruch 4, bei der der erste Kopf (2b, 3b) an einer solchen Position liegt, daß er Aufzeichnungsspuren benachbart zu denen ausbildet, die durch den Primärkopf (2a, 3a) bei derselben einen Umdrehung der rotierenden Trommel (1) auf einem Videoband ausgebildet wurden.

6. Aufzeichnungs-/Wiedergabevorrichtung für Videosignale nach Anspruch 5, bei der der zweite Magnetkopf (2c, 3c) an einer solchen Position liegt, daß er während einer folgenden Umdrehung der rotierenden Trommel Aufzeichnungsspuren ausbildet, die benachbart zu solchen liegen, wie sie vom Primärkopf (2a, 3a) während einer Umdrehung der rotierenden Trommel (11) auf einem Videoband ausgebildet wurden.

7. Aufzeichnungs-/Wiedergabevorrichtung für Videosignale nach Anspruch 3 oder Anspruch 4, bei der der Primärkopf (2a, 3a) und die Sekundärköpfe (2b, 2c, 3b, 3c) in eine Struktur integriert sind.

8. Aufzeichnungs/Wiedergabevorrichtung für Videosignale nach Anspruch 2 oder Anspruch 3, bei der die Signale mit breitem Band Grundbandsignale sind und die Signale mit schmalem Band MUSE-Signale sind.

9. Aufzeichnungs-/Wiedergabevorrichtung für Videosignale nach einem der vorstehenden Ansprüche, bei der das Videoband (4) einen durch Hauptköpfe (2) ausgebildeten Hauptspurbereich und einen durch Hilfsköpfe (3) ausgebildeten Hilfsspurbereich aufweist, wobei die Spurlagewinkel beider Bereiche übereinstimmen.

## Revendications

1. Dispositif d'enregistrement/reproduction de signaux vidéo dans lequel un ruban magnétique vidéo (4) passe de façon hélicoïdale autour d'un tambour rotatif (1) sur lequel est monté un assemblage de têtes d'enregistrement (2, 3) pour reproduire/enregistrer des signaux vidéo sur la bande (4), ledit dispositif pouvant fonctionner de manière sélective dans une premier mode de signal à large bande et dans un second mode de signal à bande étroite et comprenant un tambour rotatif (1) ayant au moins un groupe de têtes magnétiques (2, 3) incluant une tête primaire (2a, 3a) et deux têtes secondaires (2b, 2c, 3b, 3c) assemblées au tambour; et ayant des moyens de commutation de têtes (42) pour commuter entre différents ensembles de têtes et des moyens de commutation de vitesse de ruban (45) pour commuter entre différentes vitesses de ruban, caractérisé en ce que ledit dispositif comprend également des moyens de décision de bande (44) pour déterminer si ledit signal vidéo est un signal à large bande ou est un signal à bande étroite;
lesdits moyens de commutation de vitesse de ruban (45) sont capables de commuter automatiquement la vitesse de ruban en accord avec les moyens de décision de bande d'une vitesse basse à une vitesse élevée pour des signaux à large bande et d'une vitesse élevée à une vitesse basse pour des signaux à bande étroite; et en ce que
lesdits moyens de commutation de têtes (42) sont capables de sélectionner automatiquement celle des têtes secondaires (2b, 2c, 3b, 3c) qui doit être utilisée avec ladite tête primaire (2a, 3a) afin de garantir qu'une tête secondaire utilisée pour des signaux à large bande est différente d'une tête secondaire utilisée pour des signaux à bande étroite.

2. Dispositif d'enregistrement/reproduction de signaux vidéo selon la revendication 1, dans lequel il est prévu un circuit de traitement de signaux (41) pour traiter des signaux vidéo qui lui sont appliqués en entrée et qu'il délivre; et dans lequel
lesdits moyens de décision de bande (44) sont constitués par un circuit de sélection de signaux pour identifier si les signaux qui lui sont appliqués en entrée en provenance du circuit de traitement de signaux ci-dessus (41) sont des signaux à large bande ou des signaux à bande étroite;
lesdits moyens de commutation de têtes (42) sont constitués par un circuit de commutation de têtes pour déterminer une tête secondaire (2b, 2c, 3b, 3c) à utiliser en combinaison avec une tête primaire (2a, 3a) en commutant lesdites deux têtes secondaires conformément à une entrée en provenance du circuit de sélection de signaux (41); et dans lequel il est également prévu
un amplificateur de têtes (43) qui amplifie des signaux vidéo qui lui sont envoyés à travers le circuit de traitement de signaux (41) et le circuit de commutation de têtes (42) et qui reproduit aussi des signaux vidéo qui lui sont envoyés à travers la tête primaire (2a, 3a) et la tête secondaire (2b, 2c, 3b, 3c), et qui opère afin d'obtenir le courant qui convient le mieux; et dans lequel
lesdits moyens de commutation de vitesse (45) sont constitués par un circuit de commande de vitesse pour commander des vitesses de ruban magnétique vidéo conformément à la sortie provenant du circuit de sélection de signaux.

3. Dispositif d'enregistrement/reproduction de signaux vidéo selon la revendication 1 ou 2, dans lequel les têtes secondaires (2b, 2c, 3b, 3c) comprennent une première tête magnétique (2b, 3b) et une seconde tête magnétique (2c, 3c), chacune d'elles comprenant un entrefer ayant un angle d'azimut qui est l'inverse de l'angle d'azimut de tête primaire, et des enregistrements sans bande de garde sur deux canaux de signaux ayant une large bande sont réalisés au moyen de la combinaison de la tête primaire (2a, 3a) et de la première tête magnétique (2b, 3b), tandis que des enregistrements sans bande de garde sur un canal de signaux ayant une bande étroite sont réalisés au moyen de la combinaison de la tête primaire (2a, 3a) et de la seconde tête magnétique (2c, 3c).

4. Dispositif d'enregistrement/reproduction de signaux vidéo selon la revendication 1 ou 2, dans lequel les têtes secondaires (2b, 2c, 3b, 3c) comprennent une première tête magnétique (2b, 3b) et une seconde tête magnétique (2c, 3c), et la seconde tête magnétique (2c, 3c) a le même angle d'azimut que soit la tête primaire (2a, 3a) soit la première tête (2b, 3b).

5. Dispositif d'enregistrement/reproduction de signaux vidéo selon la revendication 3 ou 4, dans lequel la première tête (2b, 3b) est située dans une position pour former des pistes d'enregistrements adjacentes à celles formées par la tête primaire (2a, 3a) sur un ruban magnétique vidéo lors de la même rotation unique du tambour rotatif (1).

6. Dispositif d'enregistrement/reproduction de signaux vidéo selon la revendication 5, dans lequel la seconde tête magnétique (2c, 3c) est située dans une position pour former des pistes d'enregistrement adjacentes à celles formées par la tête primaire (2a, 3a) sur un ruban magnétique vidéo pendant la rotation du tambour rotatif (11), pendant la rotation suivante du tambour rotatif.

7. Dispositif d'enregistrement/reproduction de signaux vidéo selon la revendication 3 ou 4, dans lequel la tête primaire (2a, 3a) et les têtes secondaires (2b, 2c, 3b, 3c) sont intégrées en une seule structure.

8. Dispositif d'enregistrement/reproduction de signaux vidéo selon la revendication 2 ou 3, dans lequel les signaux ayant une large bande sont définis comme des signaux en bande de base, et les signaux ayant une bande étroite sont définis comme des signaux MUSE.

9. Dispositif d'enregistrement/reproduction de signaux vidéo selon l'une quelconque des revendications précédentes, dans lequel le ruban magnétique vidéo (4) comprend une zone de piste principale formée par des têtes principales (2) et une zone de piste auxiliaire formée par des têtes auxiliaires (3), et les angles d'avance de phase de piste sont les mêmes pour les deux zones.
